# EUROPÄISCHE PATENTSCHRIFT

(11) **EP 4 088 801 B1**
(45) Veröffentlichungstag und Bekanntmachung des Hinweises auf die Patenterteilung: **21.02.2024**
(21) Anmeldenummer: 22170189.9
(22) Anmeldetag: 27.04.2022
(51) Int. Cl.: B01D 29/15, B01D 35/147, B01D 35/153

(54) **FILTERVORRICHTUNG**
FILTER DEVICE
DISPOSITIF FILTRE

(30) Priorität: 12.05.2021 DE 102021002511
(43) Veröffentlichungstag der Anmeldung: 16.11.2022
(60) Teilanmeldung: 24151211.0
(73) Patentinhaber: Hydac Filtertechnik GmbH, 66280 Sulzbach/Saar (DE)
(72) Erfinder: Sakraschinsky, Michael, 66386 St. Ingbert (DE); Röder, Dirk, 66123 Saarbrücken (DE); Braune, Martin, 66130 Brebach-Fechingen (DE)
(74) Vertreter: Bartels und Partner, Patentanwälte

(56) Entgegenhaltungen:
- DE-A1-102008 036 055
- DE-A1-102017 009 255
- DE-U1-202007 008 483
- DE-U1-202019 102 432

## Beschreibung

Die Erfindung betrifft eine Filtervorrichtung mit den Merkmalen im Oberbegriff von Anspruch 1.

Eine Filtervorrichtung ist aus der nachveröffentlichten DE 10 2020 004 489 bekannt. Die Filtervorrichtung weist ein Filtergehäuse auf, das eine Anschlussstelle für die Zufuhr eines Unfiltratstroms und eine weitere Anschlussstelle für die Abfuhr eines Filtratstroms aufweist. In der Filtervorrichtung ist ein hohlzylindrisches Filterelement mit einem Filtermaterial angeordnet, um Unfiltrat zu filtern. Des Weiteren ist eine Trenneinrichtung vorgesehen, um die Anschlussstellen voneinander zu trennen. Diese Trenneinrichtung ist im Filtergehäuse in Form einer schrägen Trennwand angeordnet und zur Absperrung von Zufuhr und Abfuhr drehbar. Eine derartige Filtervorrichtung bietet viele Vorteile beim Filterelementwechsel, insbesondere wenn die Hydraulikleitungen, die an die Anschlussstellen angeschlossen sind, drucklos geschaltet sind. Denn dann kann das Filterelement aus der Filtervorrichtung nach Abschrauben eines Deckels entnommen werden, wobei relativ wenig Fluid aus den Hydraulikleitungen in das Filtergehäuse einfließt.

Die DE 20 2019 102 432 U1 beschreibt eine Filtervorrichtung mit den Merkmalen im Oberbegriff von Anspruch 1 mit einem Filtergehäuse, das mindestens zwei Anschlussstellen, wie einen Zulauf für Unfiltrat und einen Ablauf für Filtrat, aufweist sowie ein austauschbares Filterelement aufnimmt, wobei zumindest eine Ventileinrichtung vorgesehen ist, die in einer Öffnungsstellung einen Fluidfluss zwischen einer der Anschlussstellen und dem Filterelement ermöglicht und in einer Schließstellung diesen Fluidfluss unterbindet, wobei die Ventileinrichtung mittels einer Ansteuereinrichtung zwischen der Öffnungsstellung und der Schließstellung bewegbar ist, und wobei eine Ventileinrichtung ein Zuflussventil ist, das im Fluidfluss zwischen dem Zulauf und einer Außenseite des Filterelements angeordnet ist und ein Zuflussventilschließglied aufweist, das an einem Ventilsitz an einer Gehäusebohrung des Zulaufs dichtend zur Anlage kommt und durch eine Feder in die Schließstellung beaufschlagt ist.

Weitere Filtervorrichtungen gehen aus der DE 10 2008 036 055 A1, der DE 10 2017 009 255 A1 und der DE 20 2007 008 483 U1 hervor.

Ausgehend von diesem Stand der Technik liegt der Erfindung die Aufgabe zugrunde, eine verbesserte Filtervorrichtung aufzuzeigen, die einen servicefreundlichen Filterelementwechsel ermöglicht, insbesondere auch dann, wenn die an die Filtervorrichtung angeschlossenen Hydraulikleitungen noch unter Druck stehen.

Eine dahingehende Aufgabe löst eine Filtervorrichtung mit den Merkmalen des Patentanspruchs 1.

Gemäß dem Kennzeichen des Anspruchs 1 ist vorgesehen, dass eine schräge Trennscheibe im Filtergehäuse ortsfest angeordnet ist, um den Zulauf vom Ablauf zu trennen; und dass das Zuflussventil an der Trennscheibe angeordnet ist. Auf diese Weise lässt sich das Zuflussventil einfach im Filtergehäuse montieren und zusammen mit der Trennscheibe tauschen. Ein weiterer Vorteil ist, dass das Zuflussventil mit der Trennscheibe als Baugruppe vorgefertigt werden kann.

Es ist die Ventileinrichtung vorgesehen, die in einer Öffnungsstellung einen Fluidfluss zwischen einer der Anschlussstellen und dem Filterelement ermöglicht und in einer Schließstellung diesen Fluidfluss unterbindet; und die Ventileinrichtung ist mittels einer Ansteuereinrichtung zwischen der Öffnungsstellung und der Schließstellung bewegbar. Auf diese Weise lässt sich auch bei unter Druck stehenden Hydraulikleitungen das Einfließen von Hydraulikflüssigkeit in das Gehäuse während des Filterelementwechsels sicher unterbinden. Dadurch wird das Öffnen des Filtergehäuses und ein Austausch des verbrauchten Filterelements gegen ein Neuelement wesentlich erleichtert. Es sind zum Beispiel keine oder weniger Vorkehrungen gegen aus dem Filtergehäuse tropfende Flüssigkeit zu treffen. Durch die Anordnung zumindest eines Ventils im Ventilgehäuse wird zudem die im Filtergehäuse befindliche Menge an Fluid, die beim Öffnen des Filtergehäuses austreten könnte, begrenzt oder zumindest stark reduziert.

Durch das Zuflussventil lässt sich die Fluidverbindung zwischen dem Zulauf und dem Filterelement wirksam sperren. Das Zuflussventilschließglied geht vorteilhaft im unbetätigten Zustand und bei nachlassendem Fluiddruck in der Zufuhr von selbst in die Sperrstellung.

Das Zuflussventil kann durch eine Drehung des Filterelements zwischen der Schließstellung und der Öffnungsstellung bewegbar sein; und an einer benachbarten Endkappe des Filterelements kann eine Kulissenführung vorgesehen sein, die über einen Mitnehmer das Zuflussventilschließglied bewegt. Auf diese Weise kann das Zuflussventil vorteilhaft beim Einsetzen des Filterelements in das Filtergehäuse geöffnet und offengehalten werden. Beim Herausnehmen des Filterelements aus dem Filtergehäuse wird das Zuflussventil, vorzugsweise bereits vor der Öffnung des Filtergehäuses, in die Schließstellung bewegt.

Mit Vorteil ist der Mitnehmer ein einstückiger Bestandteil des Zuflussventilschließglieds. Auf diese Weise ist der Mitnehmer ein verliersicherer Teil des Ventilschließglieds und die unmittelbare Betätigung des Zuflussventilschließglieds durch die Kulissenführung des Filterelements ist beim Einschrauben sichergestellt.

Die Kulissenführung kann ein einen Halbkreis bildender ringförmiger axialer Vorsprung an der benachbarten Endkappe des Filterelements sein, der an einem Ende einen größeren radialen Abstand von einer Längsachse des Filterelements als an einem anderen Ende besitzt. Auf diese Weise wird bei der letzten Drehung des Filterelements um 180° das Zuflussventil betätigt und in seiner Öffnungsstellung bewegt.

Der axiale Vorsprung der Kulissenführung kann an einem Ende größer als am anderen Ende sein. Somit ist ein Ausgleich für die Annäherung des Filterelements an das Zuflussventil während eines Einschraubens des Filterelements vorgesehen.

An der Trennscheibe kann eine Rasteinrichtung vorgesehen sein, die das Zuflussventilschließglied über zumindest eine Rastnase verliersicher an der Trennscheibe hält. Ein weiterer Vorteil dieser Ausbildung ist, dass das Ventilschließglied bei der Montage des Zuflussventils einfach auf die Rasteinrichtung aufgesteckt werden kann.

Die Rasteinrichtung kann drei Rastnasen aufweisen, die auf einem Teilkreis gleichmäßig versetzt angeordnet sind und das Zuflussventilschließglied auf der Außenseite der Feder führen. Mithin ist eine einfache Befestigung des Zuflussventilschließgliedes und dessen sichere Führung gewährleistet. Weiter ist die Feder gegen Knicken geschützt aufgenommen.

Besonders vorteilhaft ist eine Ventileinrichtung ein Abflussventil, das im Fluidfluss zwischen einer Innenseite des Filterelements und dem Ablauf angeordnet ist und ein, vorzugsweise im Querschnitt T-förmiges, Abflussventilschließglied aufweist, das gegen einen Anschlag an einer Trennscheibe, die Zufluss und Abfluss trennt, dichtend zur Anlage kommt und durch eine Feder in die Schließstellung beaufschlagt ist. Auf diese Weise kann das Abflussventil vorteilhaft beim Einsetzen des Filterelements in das Filtergehäuse geöffnet und offengehalten werden. Beim Herausnehmen des Filterelements aus dem Filtergehäuse wird das Abflussventil, vorzugsweise bereits vor der Öffnung des Filtergehäuses, in die Schließstellung bewegt.

Der Anschlag kann durch einen eingelegten Ring gebildet sein, der vorzugsweise im Querschnitt L-förmig ist. Ein solcher Ring kann beispielsweise in einer Umfangsnut in einem rohrförmigen Stutzen angeordnet sein. Der Ring kann flexibel sein und vorzugsweise aus einem Elastomer bestehen.

Das Abflussventilschließglied ist vorteilhaft durch eine Drehung des Filterelements zwischen der Öffnungsstellung und der Schließstellung bewegbar; das Filterelement ist über einen Gewindestutzen in einen Anschlussstutzen an der Trennscheibe einschraubbar; und am Gewindestutzen ist zumindest ein axial vorragender Pin vorgesehen, der beim Einschrauben des Filterelements in die Trennscheibe das Abflussventilschließglied in die Öffnungsstellung bewegt. Auf diese Weise kann das Abflussventil vorteilhaft beim Einsetzen des Filterelements in das Filtergehäuse geöffnet und offengehalten werden. Beim Herausnehmen des Filterelements aus dem Filtergehäuse wird das Abflussventil, vorzugsweise bereits vor der Öffnung des Filtergehäuses, in die Schließstellung bewegt.

Der Pin kann an einer Innenseite des Gewindestutzens angeordnet sein. Diese Anordnung ermöglicht es, dass der Pin in Form eines geraden Stabes ausgebildet werden kann, der sich im eingeschraubten Zustand des Filterelements am Ring vorbei erstreckt.

Am Gewindestutzen sind bevorzugt drei oder mehr Pins vorgesehen, die auf einem Teilkreis gleichmäßig versetzt angeordnet sind. Dies stellt sicher, dass das Abflussventilschließglied beim Einschrauben des Filterelements gleichmäßig axial bewegt wird und somit nicht verkanten kann. Ein weiterer Vorteil ist, dass eine umlaufend gleich große Durchflussöffnung durch das Einschrauben des Filterelements geschaffen wird. Diese kann bei entsprechend hohem Fluiddruck auf das Abflussventilschließglied durch Abheben desselben von den Pins vergrößert werden.

Das Abflussventil kann an einem, vorzugsweise abnehmbaren, Gehäusedeckel befestigt sein. Der Gehäusedeckel ermöglicht es, die Trennscheibe im Filtergehäuse zu montieren und das Abflussventil leicht zu tauschen bzw. zu warten.

Die Erfindung ist nachfolgend anhand von in Zeichnungen dargestellten Ausführungsbeispielen näher erläutert, die schematisch und nicht maßstäblich dargestellt sind. Es zeigen:
- Fig. 1: einen Querschnitt durch eine erfindungsgemäße Filtervorrichtung;
- Fig. 2: eine perspektivische Ansicht der Filtervorrichtung von Fig. 1;
- Fig. 3: eine Explosionszeichnung der Filtervorrichtung von Fig. 1;
- Fig. 4: eine Querschnittsdarstellung einer Trennscheibe mit einem Zuflussventil und einem Abflussventil;
- Fig. 5: eine Ansicht von unten auf die Trennscheibe der Fig. 4;
- Fig. 6: eine perspektivische Ansicht der Trennscheibe von Fig. 4;
- Fig. 7 und 8: Schnittdarstellungen eines Kopfteils der Filtervorrichtung;
- Fig. 9 bis 11: eine Schnittdarstellung, eine Außensicht und eine perspektivische Ansicht eines Filterelements;
- Fig. 12 bis 14: eine Schnittdarstellung, eine Draufsicht und eine perspektivische Darstellung einer oberen Endkappe des Filterelements;
- Fig. 15: eine perspektivische Darstellung eines Bypassventils;
- Fig. 16 bis 19: perspektivische Darstellungen einer unteren Endkappe des Filterelements;
- Fig. 20 und 21: eine Querschnittsdarstellung und eine perspektivische Darstellung eines Gehäusehauptteils;
- Fig. 22 und 23: perspektivische Darstellungen eines Deckelteils;
- Fig. 24: eine Schnittdarstellung eines Gehäuseunterteils;
- Fig. 25: eine perspektivische Darstellung eines Drehteils;
- Fig. 26: eine vergrößerte Darstellung einer Halteeinrichtung;
- Fig. 27: eine perspektivische Darstellung des Gehäuseunterteils von Fig. 24; und
- Fig. 28 bis 30: perspektivische Darstellungen eines Filterelements, das in das Gehäuseunterteil eingesetzt ist.

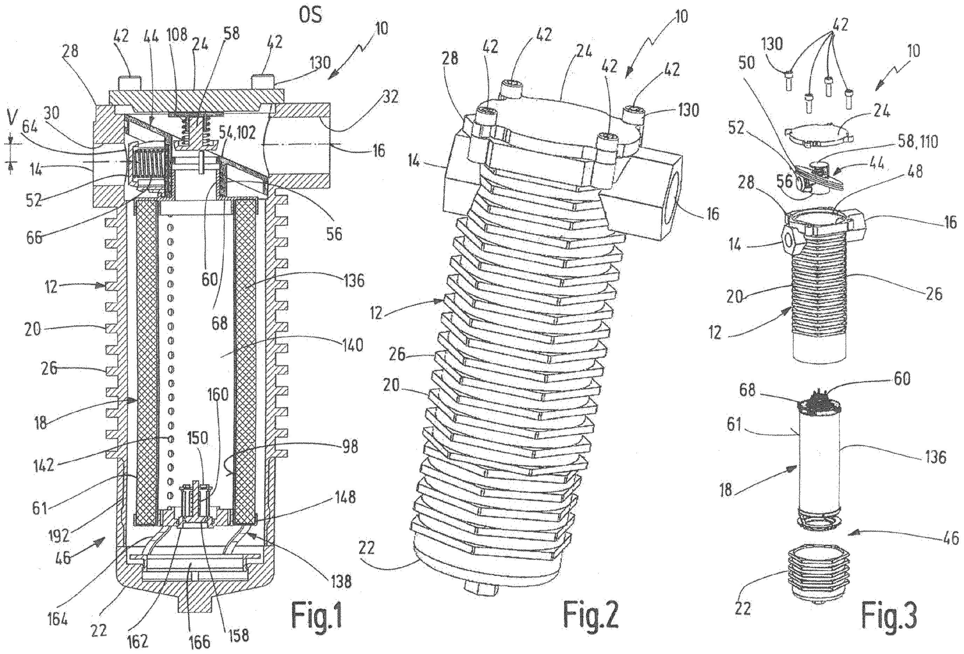

Fig. 1 bis 3 zeigen eine erfindungsgemäße Filtervorrichtung 10 mit einem Filtergehäuse 12, das mindestens zwei Anschlussstellen 14, 16, wie einen Zulauf 14 für Unfiltrat und einen Ablauf 16 für Filtrat, aufweist sowie ein austauschbares Filterelement 18 aufnimmt. Das Filtergehäuse 12 ist dreiteilig ausgebildet und weist ein Gehäusehauptteil 20, ein Gehäuseunterteil 22 und ein Deckelteil 24 auf. Das Gehäusehauptteil 20 ist im Wesentlichen zylindrisch, wobei von der Zylinderwand umlaufende Rippen 26 abstehen, die umfangsseitig sechseckförmig ausgebildet sind. Im Bereich eines Gehäusekopfes 28 sind auf gegenüberliegenden Seiten die Anschlussstellen für Zulauf 14 und Ablauf 16 vorgesehen. Diese sind ebenfalls außen sechseckförmig. Eine Gehäusebohrung 30 des Zulaufs 14 hat einen kleineren Durchmesser als eine Gehäusebohrung 32 des Ablaufs 16. Die Gehäusebohrungen 30, 32 weisen einen axialen Versatz V zueinander auf. Das Gehäuseunterteil 22 ist an das Gehäusehauptteil 20 von der Unterseite her über ein Gewinde 36 angeschraubt und über einen nicht näher dargestellten Dichtring in einer Umfangsnut abgedichtet. Ein Deckelteil 24 ist mittels vier Befestigungsschrauben 42 am Gehäuseoberteil 28 befestigt.

Erfindungsgemäß ist zumindest eine Ventilvorrichtung 44 vorgesehen, die in einer Öffnungsstellung OS einen Fluidfluss zwischen einer der Anschlussstellen 14, 16 und dem Filterelement 18 ermöglicht und in einer Schließstellung SS diesen Fluidfluss unterbindet. Die Ventileinrichtung 44 ist mittels einer Ansteuereinrichtung 46, die das Gehäuseunterteil 22 und das Filterelement 18 umfasst, zwischen der Öffnungsstellung OS und der Schließstellung SS bewegbar. Hierzu ist in das Filtergehäuse 12 von oben durch eine durch das Deckelteil 24 verschlossene Öffnung 48 eine schräg angeordnete Trennscheibe 50 eingesetzt, an der eine Ventileinrichtung 44 in Form eines Zuflussventils 52 vorgesehen ist. An der Trennscheibe 50 ist ein Ring 54 in einem Aufnahmestutzen 56 vorgesehen, der mit einem am Deckelteil 24 vorgesehenen Abflussventil 58 zusammenwirkt. In die Trennscheibe 50 ist das Filterelement 18 mit seinem Gewindestutzen 60 eingeschraubt.

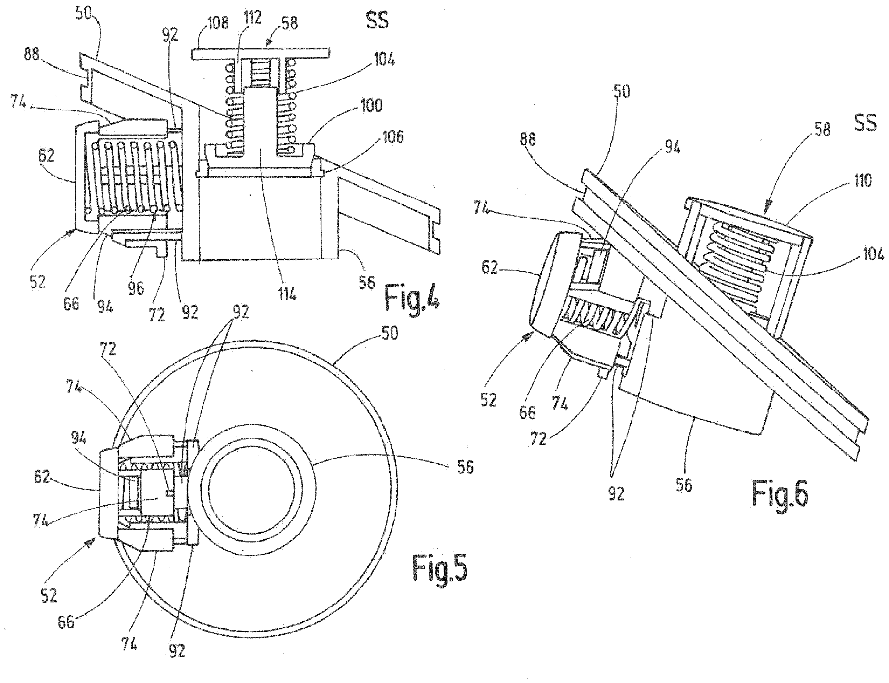

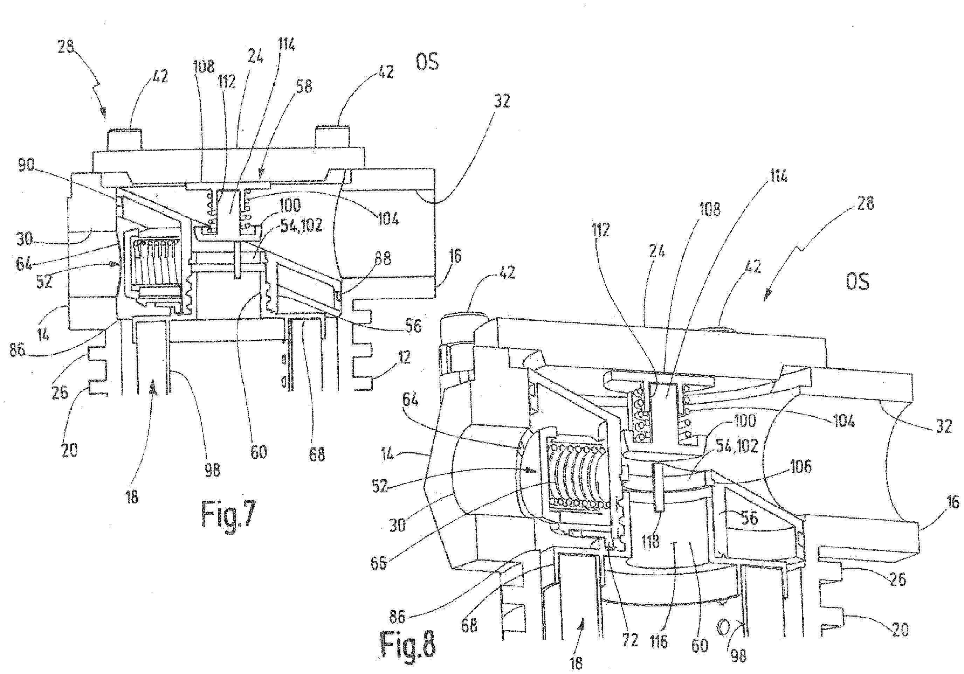

Wie die Fig. 4 bis 8 näher zeigen, ist die eine Ventileinrichtung 44 das Zuflussventil 52, das im Fluidfluss zwischen dem Zulauf 14 und einer Außenseite 61 des Filterelements 18 angeordnet ist und ein Zuflussventilschließglied 62 aufweist, das an einem Ventilsitz 64 an der Gehäusebohrung 30 des Zulaufs 14 dichtend zur Anlage kommt und durch eine Feder 66 in die Schließstellung SS beaufschlagt ist. Das Zuflussventilschließglied 62 ist zwischen der Öffnungsstellung OS und der Schließstellung SS durch eine Drehung des Filterelements 18 bewegbar. An einer benachbarten oberen Endkappe 68 des Filterelements 18 ist dazu eine Kulissenführung 70 vorgesehen, die über einen Mitnehmer 72 das Zuflussventilschließglied 62 bewegt. Der Mitnehmer 72 ist an einem Befestigungsteil 74 des Zuflussventilschließglieds 62 befestigt. Von diesen Befestigungsteilen 74 sind drei vorgesehen, die gleichmäßig auf einem Teilkreis versetzt angeordnet sind. Der Mitnehmer 72 ist somit ein einstückiger Bestandteil des Zuflussventilschließglieds 62.

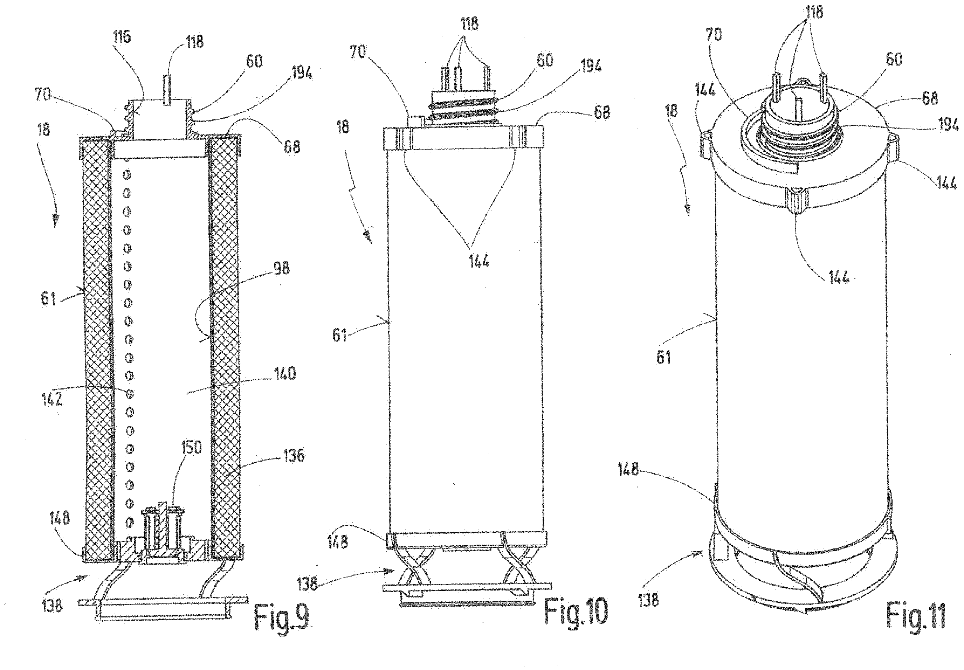

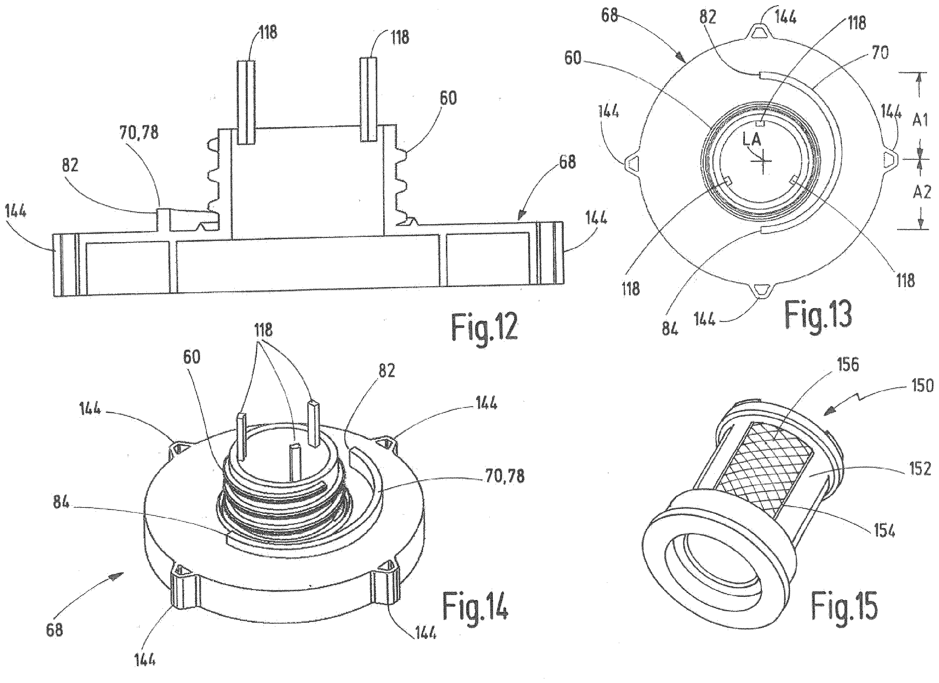

Wie in den Fig. 9 bis 14 näher gezeigt wird, ist die Kulissenführung 70 ein einen Halbkreis bildender abschnittsweise ringförmiger axialer Vorsprung 78 an der benachbarten oberen Endkappe 68 des Filterelements 18 der an einem Ende 82 einen größeren radialen Abstand A1 von einer Längsachse LA des Filterelements 18 als an einem anderen Ende 84 besitzt. Der axiale Vorsprung 78 der Kulissenführung 70 ist darüber hinaus an einem Ende 82 größer als am anderen Ende 84, wie man am besten in Fig. 14 sieht. Von auf das Filterelement 18 gesehen nimmt damit die Höhe des axialen Vorsprungs 78 in einer Richtung entgegen dem Uhrzeigersinn zu.

Die Trennscheibe 50 ist im Filtergehäuse 12 ortsfest angeordnet und stützt sich an einem Absatz 86 des Filtergehäuses 12 ab. Außenumfangsseitig ist die Trennscheibe 50 mit einer Umfangsnut 88 versehen, in der ein Dichtring 90 angeordnet ist. Parallel zur Längsachse LA der Filtervorrichtung 10 weist die Trennscheibe 50 den Aufnahmestutzen 56 auf. An diesem Aufnahmestutzen 56 ist das bereits erwähnte Zuflussventil 52 angeordnet. Hierzu ist eine Rasteinrichtung 92 vorgesehen, die seitlich vorkragt. In der Rasteinrichtung 92 ist die Feder 66 angeordnet, die das Zuflussventilschließglied 62 in die Schließstellung SS vorspannt. Die Rasteinrichtung 92 weist weiterhin drei Rastnasen 94 auf, die mit den Befestigungsteilen 74 des Zuflussventilschließglieds 62 verhakt sind. Somit ist an der Trennscheibe 50 eine Rasteinrichtung 92 vorgesehen, die das Zuflussventilschließglied 62 über zumindest eine Rastnase 94 verliersicher an der Trennscheibe 50 hält. Die Rastnasen 94 sind auf einem Teilkreis gleichmäßig versetzt angeordnet und führen das Zuflussventilschließglied 62 auf der Außenseite 96 der Feder 66.

Wie die Fig. 4 bis 8 weiter zeigen ist parallel zur Längsachse LA der Filtervorrichtung 10 eine Ventileinrichtung 44 in Form des Abflussventils 58 vorgesehen, das im Fluidfluss zwischen der Innenseite 98 des Filterelements 18 und dem Ablauf 16 angeordnet ist und ein im Querschnitt T-förmiges Abschlussventilschließglied 100 aufweist, das gegen einen Anschlag 102 an der Trennscheibe 50, die Zufluss 14 und Abfluss 16 trennt, dichtend zur Anlage kommt und durch eine Feder 104 in die Schließstellung SS beaufschlagt ist. Der Anschlag 102 ist durch den Ring 54 gebildet, der im Querschnitt L-förmig ist und in eine Umfangsnut 106 im Aufnahmestutzen 56 eingelegt ist. Der Ring 54 besteht vorzugsweise aus einem Elastomer. Das Abflussventilschließglied 100 ist im Querschnitt T-förmig und in einem Sockel 108 gehalten, der entweder am Deckelteil 24 des Filtergehäuses 12 oder in einem Käfig 110 angeordnet ist. Der Sockel 108 weist eine Hülse 112 auf, in der eine Stange 114 des Abflussventilschließglieds 100 verschiebbar angeordnet ist. Die Stange 114 ist außenseitig von der Feder 104 umgeben.

An einer Innenseite 116 eines Gewindestutzens 60 des Filterelements 18 ist ein Pin 118 angeordnet, der in den Fig. 9 bis 11 sichtbar ist. Vorzugsweise sind am Gewindestutzen 60 drei Pins 118 vorgesehen, die gleichmäßig auf einem Teilkreis versetzt angeordnet sind. Mit diesen Pins 118 ist es beim Einschrauben des Filterelements 18 in die Trennscheibe 50 möglich, das Abflussventilschließglied 100 vom Anschlag 102 abzuheben.

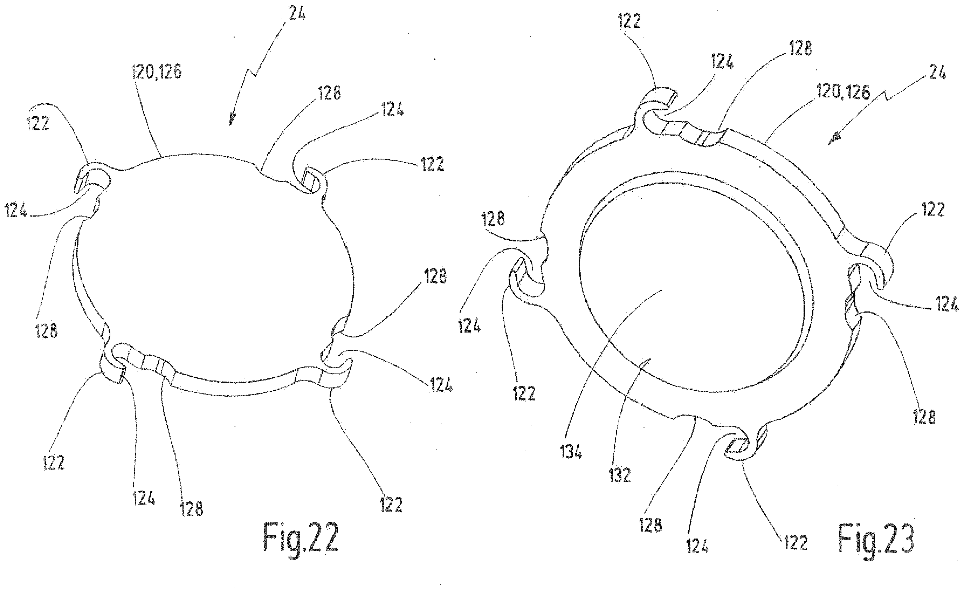

Wie die Fig. 22 und 23 näher zeigen, hat das Deckelteil 24 im Wesentlichen die Form einer Kreisschreibe 120. Außenumfangsseitig sind an der Kreisscheibe 120 bogenförmige Befestigungsarme 122 vorgesehen, in welche die Befestigungsschrauben 42 eingreifen können. Benachbart zu den Öffnungen 124 der Befestigungsarme 122 sind am Außenumfang 126 des Deckelteils 24 jeweils Einbuchtungen 128 vorgesehen, um das Deckelteil 24 an den Köpfen 130 der Befestigungsschrauben 42 vorbei vom Gehäusehauptteil 20 abheben zu können. Diese Lösung hat den Vorteil, dass das Deckelteil 24 vom Gehäusehauptteil 20 gelöst und abgehoben werden kann, ohne die Befestigungsschrauben 42 aus dem Gehäusehauptteil 20 herausschrauben zu müssen. Auf der Unterseite 132 weist das Deckelteil 24 zur Zentrierung und Abdichtung gegenüber dem Gehäusehauptteil 20 einen axialen Fortsatz 134 auf.

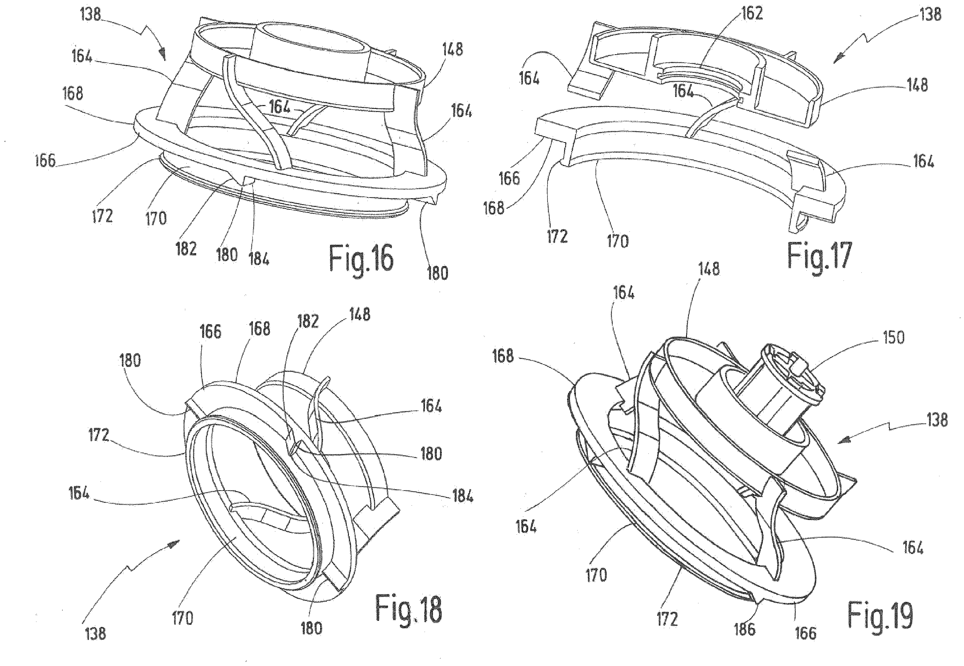

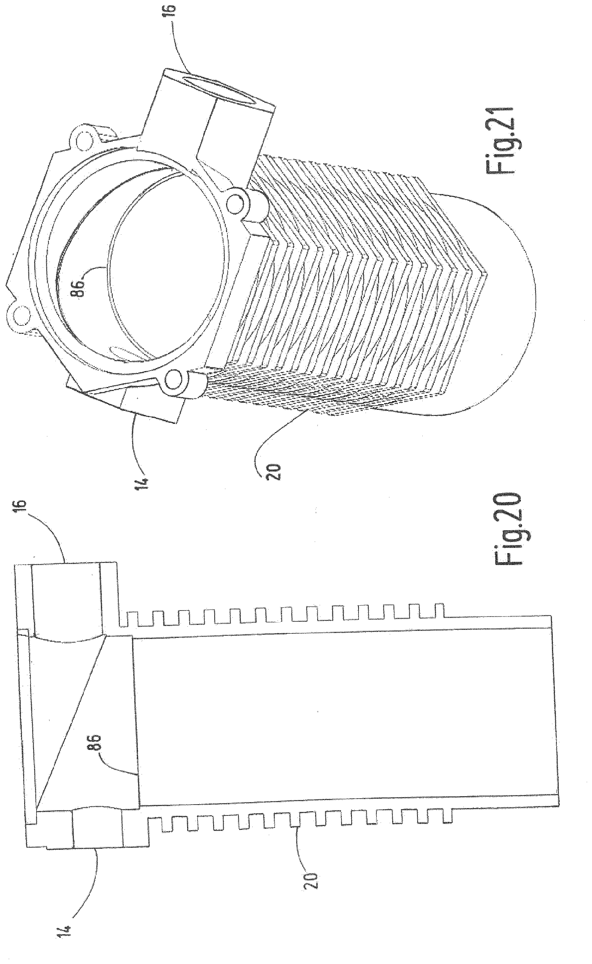

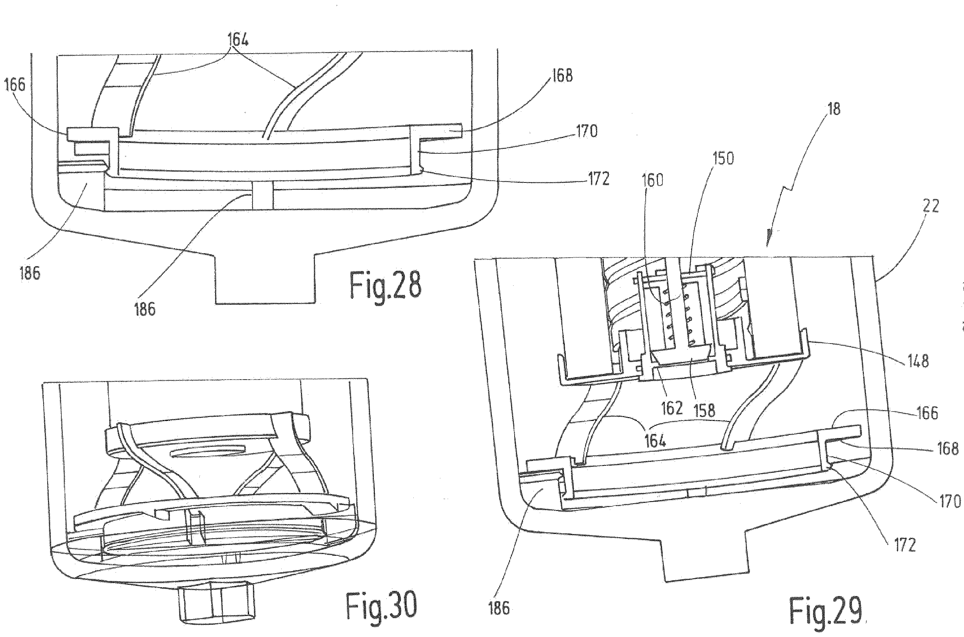

Der weitere Aufbau der Filtervorrichtung 10 unterhalb der oberen Endkappe 68 des Filterelements 18 ist bereits aus der nachveröffentlichten DE 10 2020 004 489 bekannt und wird daher im Folgenden anhand der Fig. 1 bis 3, 9 bis 11 und 15 bis 30 nur noch überblicksartig beschrieben.

Das Filterelement 18 weist ein Filtermaterial 136 auf, das zwischen der oberen Endkappe 68 und einer unteren Endkappe 138 angeordnet ist und durch diese eingefasst ist. Auf einer Innenseite 98 des Filtermaterials 136 ist ein Stützrohr 140 mit einer Lochung 142 vorgesehen. Die obere Endkappe 68 weist umfangsseitig vier auf einem Teilkreis gleichmäßig versetzt angeordnete Vorkragungen 144 auf, die die Handhabung des Filterelements 18 beim Abziehen vom Gehäuseunterteil 22 erleichtern sollen.

Die untere Endkappe 138 des Filterelements 18 ist mehrteilig ausgeführt, wobei ein Einfassring 148 das Filtermaterial 136 einfasst und ein Bypassventil 150 hält. In den Einfassring 148 ist das Bypassventil 150 austauschbar eingesetzt. Dieses weist einen Käfig 152 mit Fenstern 154 auf, in denen ein grobmaschiges Filtergewebe 156 vorgesehen ist, wie man in der Fig. 15 sehen kann. Das Bypassventil 150 weist ein Bypassventilschließglied 158 auf, das durch eine Feder 160 in die Schließstellung SS beaufschlagt ist. Das Bypassventilschließglied 158 ist im Querschnitt T-förmig und gelangt an einem unteren Ventilsitz 162 am Einfassring 148 zur Anlage.

Mit diesem Einfassring 148 ist über vier S-förmige Federbänder 164 ein Befestigungsring 166 verbunden. Der Befestigungsring 166 hat einen größeren Durchmesser als der Einfassring 148. Der Befestigungsring 166 ist in das Gehäuseunterteil 92 einschiebbar und rastend befestigbar. Der Befestigungsring 166 weist einen Flansch 168 und einen sich vom Flansch 168 axial nach unten weg erstreckenden Stutzen 170 auf, der außenseitig mit einem Rastbund 172 versehen ist, über den das Filterelement 18 im Gehäuseunterteil 22 in einer Ausnehmung 174, die an einem oberen Ende 176 eine nach innen eingezogene Raste 1 78 aufweist, lösbar festlegbar.

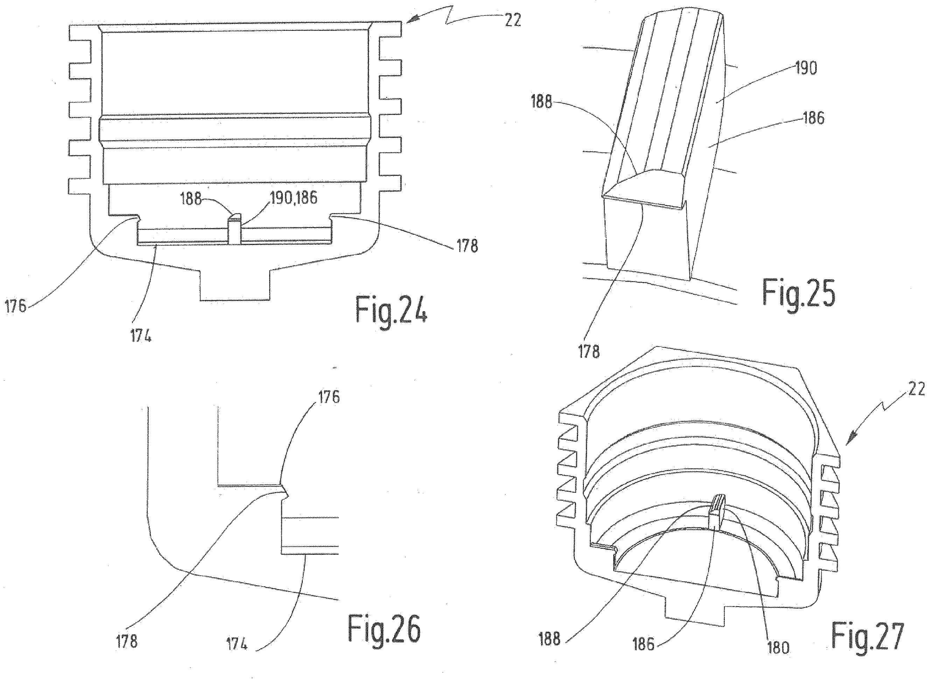

Am Flansch 168 sind - ebenfalls auf einem Teilkreis gleichmäßig versetzt - vier Mitnehmer 180 angeordnet, die Schrägflächen 182 und vertikal verlaufende Anlageflächen 184 aufweisen, die mit Drehteilen 186 am Gehäuseunterteil 22 in Eingriff kommen können. Die Drehteile 186 sind in den Fig. 24 und 25 gezeigt und weisen ebenfalls eine Form mit einer schrägen Fläche 188 und einer vertikalen Fläche 190 auf, so dass die Mitnehmer 180 und die Drehteile 186 in einer Drehrichtung des Gehäuseunterteils 22 im Uhrzeigersinn beim Zuschrauben aneinander entlang gleiten können und bei einer Drehung in Aufschraubrichtung gegen den Uhrzeigersinn in Eingriff geraten.

Das Gehäuseunterteil 22 ist über ein Gewinde 192 am Gehäusehauptteil 20 festgelegt. Das Filterelement 18 weist ein zweites Gewinde 194 auf, um in der Trennscheibe 50 befestigt werden zu können. Die Gewindesteigungen dieser beiden Gewinde 192, 194 unterscheiden sich, um sicherzustellen, dass bei einem Abdrehen des Gehäuseunterteils 22 das Filterelement 18 zuerst aus der Trennscheibe 50 geschraubt wird, ehe es gemeinsam mit dem Gehäuseunterteil 22 aus dem Gehäusehauptteil 20 ausgeschraubt wird. Die Federelemente 138 zwischen den unteren Endkappenteilen 148, 160 sind dazu vorgesehen, einen Längenausgleich zu ermöglichen. Beim Einschrauben ist das Vorgehen umgekehrt. Zuerst wird das Filterelement 18 in die Trennscheibe 50 eingeschraubt und sodann das Gehäuseunterteil 22 final an das Gehäusehauptteil 20 angeschraubt.

Nachfolgend wird die Funktionsweise der Filtervorrichtung beschrieben.

Beim Abschrauben des Gehäuseunterteils 22 vom Gehäusehauptteil 20 wird das Filterelement 18 im Filtergehäuse 12 mitgedreht. In einer ersten Phase werden durch das Ausschrauben des Filterelements 18 das Zuflussventil 52 und das Abflussventil 58 betätigt, so dass sie aufgrund der Federbelastung in die Schließstellung SS gehen. Die Federelemente 164 der unteren Endkappe 138 federn hierbei ein und ermöglichen so einen Ausgleich. In der zweiten Phase, wenn das Filterelement 18 aus dem Ausnahmestutzen 56 der Trennscheibe 50 herausgeschraubt ist, dreht das Filterelement 18 an der Trennscheibe 50 durch, während das Gehäuseunterteil 22 weiter abgeschraubt wird. In der dritten und letzten Phase geraten das Gehäuseunterteil 22 und das Gehäusehauptteil 20 außer Eingriff. Das Filterelement 18 bleibt aber durch eine Rastverbindung 172, 176 am Gehäuseunterteil 22 festgelegt und wird aus dem Gehäusehauptteil 20 herausgezogen. Abschließend kann das Filterelement 18 vom Gehäuseunterteil 22 abgenommen und durch ein neues Filterelement 18 ersetzt werden.

Beim Einbau des neuen Filterelements 18 wird dieses auf das Gehäuseunterteil 22 gesteckt und in das Gehäusehauptteil 20 eingeschoben. Das Gehäuseunterteil 22 wird auf das Gehäusehauptteil 20 geschraubt. Hierbei wird das Filterelement 18 mitgedreht und in die Trennscheibe 50 eingeschraubt. Durch das Einschrauben des Filterelements 18 werden auch das Zuflussventil 52 und das Abflussventil 58 in die jeweiligen Öffnungsstellungen OS bewegt. Wenn das Filterelement 18 vollständig in die Trennscheibe 50 eingeschraubt ist, können die Mitnehmer 180 und Drehteile 186 an der unteren Endkappe 138 und dem Gehäuseunterteil 22 über ihre jeweiligen Schrägflächen 182, 188 aneinander abgleiten, so dass das Gehäuseunterteil 22 vollständig aufgeschraubt werden kann, ohne das Filterelement 18 weiter mitzudrehen.

Durch die erfindungsgemäße Filtervorrichtung 10 wird eine Lösung aufgezeigt, um einen Innenraum eines Filtergehäuses 12 von einem Zufluss 14 und einem Abfluss 16 wirksam durch Ventileinrichtungen 44 zu trennen, wenn das Filtergehäuse 12 aufgeschraubt wird, um das Filterelement 18 zu ersetzen. Dies hat so keine Entsprechung im Stand der Technik.

Es versteht sich, dass Bezeichnungen wie "oben" und "unten" in Bezug auf die Bildebene der jeweiligen Zeichnung gemeint sind. In der tatsächlichen Einbausituation kann die Filtervorrichtung in einem Winkel zur Vertikalen angeordnet sein.

## Patentansprüche

1. Filtervorrichtung mit einem Filtergehäuse (12), das mindestens zwei Anschlussstellen (14, 16), wie einen Zulauf (14) für Unfiltrat und einen Ablauf (16) für Filtrat, aufweist sowie ein austauschbares Filterelement (18) aufnimmt, wobei zumindest eine Ventileinrichtung (44) vorgesehen ist, die in einer Öffnungsstellung (OS) einen Fluidfluss zwischen einer der Anschlussstellen (14, 16) und dem Filterelement (18) ermöglicht und in einer Schließstellung (SS) diesen Fluidfluss unterbindet, wobei die Ventileinrichtung (44) mittels einer Ansteuereinrichtung (46) zwischen der Öffnungsstellung (OS) und der Schließstellung (SS) bewegbar ist, und
wobei eine Ventileinrichtung (44) ein Zuflussventil (52) ist, das im Fluidfluss zwischen dem Zulauf (14) und einer Außenseite (61) des Filterelements (18) angeordnet ist und ein Zuflussventilschließglied (62) aufweist, das an einem Ventilsitz (64) an einer Gehäusebohrung (30) des Zulaufs (14) dichtend zur Anlage kommt und durch eine Feder (66) in die Schließstellung (SS) beaufschlagt ist,
**dadurch gekennzeichnet,**
**dass** eine schräge Trennscheibe (50) im Filtergehäuse (12) ortsfest angeordnet ist, um den Zulauf (14) vom Ablauf (16) zu trennen; und
**dass** das Zuflussventil (52) an der Trennscheibe (50) angeordnet ist.

2. Filtervorrichtung nach Anspruch 1, **dadurch gekennzeichnet, dass** das Zuflussventilschließglied (62) durch eine Drehung des Filterelements (18) zwischen der Schließstellung (55) und der Öffnungsstellung (OS) bewegbar ist; und dass an einer benachbarten Endkappe (68) des Filterelements (18) eine Kulissenführung (70) vorgesehen ist, die über einen Mitnehmer (72) das Zuflussventilschließglied (62) bewegt.

3. Filtervorrichtung nach Anspruch 2, **dadurch gekennzeichnet, dass** der Mitnehmer (72) einstückiger Bestandteil des Zuflussventilschließgliedes (62) ist.

4. Filtervorrichtung nach Anspruch 2 oder 3, **dadurch gekennzeichnet, dass** die Kulissenführung (70) ein einen Halbkreis bildender ringförmiger axialer Vorsprung (78) an der benachbarten Endkappe (68) des Filterelements (18) ist, der an einem Ende (82) einen größeren radialen Abstand von einer Längsachse (LA) des Filterelements (18) als an einem anderen Ende (84) besitzt.

5. Filtervorrichtung nach Anspruch 4, **dadurch gekennzeichnet, dass** der axiale Vorsprung (78) der Kulissenführung (70) an einem Ende (82) größer als am anderen Ende (84) ist.

6. Filtervorrichtung nach einem der vorstehenden Ansprüche, **dadurch gekennzeichnet, dass** an der Trennscheibe (50) eine Rasteinrichtung (92) vorgesehen ist, die das Zuflussventilschließglied (62) über zumindest eine Rastnase (94) verliersicher an der Trennscheibe (50) hält.

7. Filtervorrichtung nach Anspruch 6, **dadurch gekennzeichnet, dass** die Rasteinrichtung (92) drei Rastnasen (94) aufweist, die auf einem Teilkreis gleichmäßig versetzt angeordnet sind und das Zuflussventilschließglied (62) auf der Außenseite (96) der Feder (66) führen.

8. Filtervorrichtung nach einem der vorstehenden Ansprüche, **dadurch gekennzeichnet, dass** eine zusätzliche Ventileinrichtung (44) ein Abflussventil (58) ist, das im Fluidfluss zwischen einer Innenseite (98) des Filterelements (18) und dem Ablauf (16) angeordnet ist und ein, vorzugsweise im Querschnitt T-förmiges, Abflussventilschließglied (100) aufweist, das gegen einen Anschlag (102) an der Trennscheibe (50), die Zufluss (14) und Abfluss (16) trennt, dichtend zur Anlage kommt und durch eine Feder (104) in die Schließstellung (SS) beaufschlagt ist.

9. Filtervorrichtung nach Anspruch 8, **dadurch gekennzeichnet, dass** der Anschlag (102) durch einen eingelegten Ring (54) gebildet ist, der vorzugsweise im Querschnitt L-förmig ist.

10. Filtervorrichtung nach Anspruch 8 oder 9, **dadurch gekennzeichnet, dass** das Abflussventilschließglied (102) durch eine Drehung des Filterelements (18) zwischen der Öffnungsstellung (OS) und der Schließstellung (SS) bewegbar ist; dass das Filterelement (18) über einen Gewindestutzen (60) in einen Anschlussstutzen (56) an der Trennscheibe (50) einschraubbar ist; dass am Gewindestutzen (60) zumindest ein axial vorragender Pin (118) vorgesehen ist, der beim Einschrauben des Filterelements (18) in die Trennscheibe (50) das Abflussventilschließglied (100) in die Öffnungsstellung (OS) bewegt.

11. Filtervorrichtung nach Anspruch 10, **dadurch gekennzeichnet, dass** der Pin (118) an einer Innenseite (116) des Gewindestutzens (60) angeordnet ist.

12. Filtervorrichtung nach Anspruch 10 oder 11, **dadurch gekennzeichnet, dass** am Gewindestutzen (60) drei oder mehr Pins (118) vorgesehen sind, die auf einem Teilkreis gleichmäßig versetzt angeordnet sind.

13. Filtervorrichtung nach einem der Ansprüche 8 bis 12, **dadurch gekennzeichnet, dass** das Abflussventil (58) an einem, vorzugsweise abnehmbaren, Gehäusedeckel (24) befestigt ist.

## Claims

1. Filter device with a filter housing (12) which has at least two connection points (14, 16), such as an inlet (14) for unfiltered medium and an outlet (16) for filtrate, and accommodates a replaceable filter element (18), wherein at least one valve device (44) is provided which, in an open position (OS), enables a fluid flow between one of the connection points (14, 16) and the filter element (18) and, in a closed position (SS), prevents this fluid flow, wherein the valve device (44) is movable between the open position (OS) and the closed position (SS) by means of an actuating device (46), and
wherein a valve device (44) is an inflow valve (52) which is arranged in the fluid flow between the inlet (14) and an outer side (61) of the filter element (18) and has an inflow valve closing member (62) which comes into sealing contact with a valve seat (64) on a housing bore (30) of the inlet (14) and is urged into the closed position (SS) by a spring (66),
**characterised in that**
an inclined separating disc (50) is arranged stationary in the filter housing (12) in order to separate the inlet (14) from the outlet (16); and **in that** the inflow valve (52) is arranged on the separating disc (50).

2. Filter device according to claim 1, **characterised in that** the inflow valve closing member (62) can be moved between the closed position (SS) and the open position (OS) by rotating the filter element (18); and **in that** a sliding guide (70) is provided on an adjacent end cap (68) of the filter element (18), which sliding guide moves the inflow valve closing member (62) via a driver (72).

3. Filter device according to claim 2, **characterised in that** the driver (72) is an integral component of the inflow valve closing member (62).

4. Filter device according to claim 2 or 3, **characterised in that** the sliding guide (70) is an annular axial protrusion (78) forming a semicircle on the adjacent end cap (68) of the filter element (18), which has a greater radial distance from a longitudinal axis (LA) of the filter element (18) at one end (82) than at another end (84).

5. Filter device according to claim 4, **characterised in that** the axial protrusion (78) of the sliding guide (70) is larger at one end (82) than at the other end (84).

6. Filter device according to one of the preceding claims, **characterised in that** a locking device (92) is provided on the separating disc (50), which locking device holds the inflow valve closing member (62) captively on the separating disc (50) via at least one snap tab (94).

7. Filter device according to claim 6, **characterised in that** the locking device (92) has three snap tabs (94) which are arranged evenly offset on a divided circle and guide the inflow valve closing member (62) on the outside (96) of the spring (66).

8. Filter device according to one of the preceding claims, **characterised in that** an additional valve device (44) is a discharge valve (58) which is arranged in the fluid flow between an inner side (98) of the filter element (18) and the outlet (16) and has a discharge valve closing member (100), preferably T-shaped in cross-section, which comes into sealing contact against a limit stop (102) on the separating disc (50), which separates the inlet (14) and outlet (16), and is urged into the closed position (SS) by a spring (104).

9. Filter device according to claim 8, **characterised in that** the limit stop (102) is formed by an inserted ring (54) which is preferably L-shaped in cross-section.

10. Filter device according to claim 8 or 9, **characterised in that** the discharge valve closing member (102) can be moved between the open position (OS) and the closed position (SS) by rotating the filter element (18); **in that** the filter element (18) can be screwed into a connecting socket (56) on the separating disc (50) via a threaded socket (60); **in that** at least one pin (118) protruding axially is provided on the threaded socket (60), which pin moves the discharge valve closing member (100) into the open position (OS) when the filter element (18) is screwed into the separating disc (50).

11. Filter device according to claim 10, **characterised in that** the pin (118) is arranged on an inner side (116) of the threaded socket (60).

12. Filter device according to claim 10 or 11, **characterised in that** three or more pins (118), which are arranged evenly offset on a divided circle, are provided on the threaded socket (60).

13. Filter device according to one of claims 8 to 12, **characterised in that** the discharge valve (58) is attached to a, preferably removable, housing cover (24).

## Revendications

1. Installation de filtration comprenant une enveloppe (12) de filtre, qui a au moins deux points (14, 16) de raccordement, comme une arrivée (14) du non filtrat et une sortie (16) du filtrat, et dans laquelle est logé un élément (18) de filtre remplaçable, dans laquelle il est prévu au moins un dispositif (44) de soupape, qui rend possible, dans une position (OS) d'ouverture, un flux de fluide entre l'un des points (14, 16) de raccordement et l'élément (18) de filtre et qui interdit ce flux de fluide dans une position (SS) de fermeture, dans laquelle le dispositif (44) de soupape est mobile, au moyen d'un dispositif (46) de commande, entre la position (OS) d'ouverture et la position (SS) de fermeture, et
dans laquelle un dispositif (44) de soupape est une soupape (52) d'afflux, qui est montée dans le flux de fluide entre l'arrivée (14) et un côté (61) extérieur de l'élément (18) de filtre et a un élément (62) de fermeture de soupape d'afflux, qui vient en application d'une manière étanche sur un siège (64) de soupape sur un trou (30) d'enveloppe de l'arrivée (14) et est sollicité par un ressort (66) pour venir dans la position (SS) de fermeture,
**caractérisée**
**en ce qu'**un disque (50) incliné de séparation est disposé fixe en position dans l'enveloppe (12) du filtre, afin de séparer l'arrivée (14) de la sortie (16) ; et **en ce que** la soupape (52) d'afflux est montée sur le disque (50) de séparation.

2. Installation de filtration suivant la revendication 1, **caractérisée en ce que** l'élément (62) de fermeture de soupape d'afflux est, par une rotation de l'élément (18) de filtre, mobile entre la position (55) de fermeture et la position (OS) d'ouverture ; et **en ce qu'**il est prévu, sur une coiffe (68) d'extrémité voisine de l'élément (18) de filtre, un guidage (70) à coulisse, qui déplace l'élément (62) de fermeture de soupape d'afflux par un entraîneur (72) .

3. Installation de filtration suivant la revendication 2, **caractérisée en ce que** l'entraîneur (72) est une partie constitutive d'une seule pièce de l'élément (62) de fermeture de soupape d'afflux.

4. Installation de filtration suivant la revendication 2 ou 3, **caractérisée en ce que** le guidage (70) à coulisse est une saillie (78) axiale annulaire formant un demi-cercle sur la coiffe (68) d'extrémité voisine de l'élément (18) de filtre, saillie, qui a, à une extrémité (82), une distance radiale plus grande à un axe (LA) longitudinal de l'élément (18) de filtre qu'à une autre extrémité (84).

5. Installation de filtration suivant la revendication 4, **caractérisée en ce que** la saillie (78) axiale du guidage (70) à coulisse est plus grande à une extrémité (82) qu'à l'autre extrémité (84).

6. Installation de filtration suivant l'une des revendications précédentes, **caractérisée en ce qu'**il est prévu, sur le disque (50) de séparation, un dispositif (92) d'encliquetage, qui retient l'élément (62) de fermeture de soupape d'afflux, par au moins un bec (94) d'encliquetage d'une manière imperdable sur le disque (50) de séparation.

7. Installation de filtration suivant la revendication 6, **caractérisée en ce que** le dispositif (92) d'encliquetage a trois becs (94) d'encliquetage, qui sont montés de manière répartie uniformément sur une partie de cercle et guident l'élément (62) de fermeture de soupape d'afflux du côté (96) extérieur du ressort (66).

8. Installation de filtration suivant l'une des revendications précédentes, **caractérisée en ce qu'**un dispositif (44) de soupape supplémentaire est une soupape (58) de purge, qui est montée dans le flux de fluide entre un côté (98) intérieur de l'élément (18) de filtre et la sortie (16) et qui a un élément (100) de fermeture de soupape de purge, de préférence de section transversale en forme de T, qui vient en application avec étanchéité sur une butée (102) du disque (50) de séparation, qui sépare l'arrivée (14) et la sortie (16), et qui est sollicité par un ressort (104) pour venir dans la position (SS) de fermeture.

9. Installation de filtration suivant la revendication 8, **caractérisée en ce que** la butée (102) est formée d'un anneau (54) inséré, de préférence de section transversale en forme de L.

10. Installation de filtration suivant la revendication 8 ou 9, **caractérisée en ce que** l'élément (102) de fermeture de soupape de purge est, par une rotation de l'élément (18) de filtre, mobile entre la position (OS) d'ouverture et la position (SS) de fermeture ; **en ce que** l'élément (18) de filtre peut se visser par une tubulure (60) filetée dans une tubulure (56) de raccordement du disque (50) de séparation ; **en ce que**, sur la tubulure (60) filetée, est prévu au moins un ergot (118) en saillie axialement qui, lors du vissage de l'élément (18) de filtre dans le disque (50) de séparation, met l'élément (100) de fermeture de soupape de purge dans la position (OS) d'ouverture.

11. Installation de filtration suivant la revendication 10, **caractérisée en ce que** l'ergot (118) est disposé sur une face (116) intérieure de la tubulure (60).

12. Installation de filtration suivant la revendication 10 ou 11, **caractérisée en ce qu'**il est prévu, sur la tubulure (60) filetée, trois ou plusieurs ergots (118), qui sont disposés de manière répartie uniformément sur une partie de cercle.

13. Installation de filtration suivant l'une des revendications 8 à 12, **caractérisée en ce que** la soupape (58) de purge est fixée à un couvercle (24) de l'enveloppe pouvant, de préférence être retiré.
